# EUROPÄISCHE PATENTSCHRIFT

(11) **EP 1 175 567 B1**
(45) Veröffentlichungstag und Bekanntmachung des Hinweises auf die Patenterteilung: **22.12.2004**
(21) Anmeldenummer: 00917042.4
(22) Anmeldetag: 03.04.2000
(51) Int. Cl.: F16B 13/00, F16B 41/00

(54) **BEFESTIGUNGSELEMENT ZUM BEFESTIGEN VON ISOLATIONSBAHNEN ODER-PLATTEN AUF EINEM FESTEN UNTERBAU**
FIXING ELEMENT FOR FIXING INSULATING STRIPS OR PLATES ON A SOLID SUBSTRUCTURE
ELEMENT DE FIXATION DE BANDES OU DE PLAQUES D'ISOLATION SUR UNE BASE FIXE

(30) Priorität: 06.05.1999 DE 29908107 U
(43) Veröffentlichungstag der Anmeldung: 30.01.2002
(73) Patentinhaber: SFS intec Holding AG, 9435 Heerbrugg (CH)
(72) Erfinder: ANGEHRN, Beda, CH-9434 Au (CH)
(74) Vertreter: Ludescher, Hans
(86) Internationale Anmeldenummer: PCT/EP2000/002958
(87) Internationale Veröffentlichungsnummer: WO 2000/068581

(56) Entgegenhaltungen:
- EP-A- 0 783 063
- DE-A- 3 509 490
- DE-U- 9 411 222
- US-A- 5 265 998

## Beschreibung

Die Erfindung betrifft ein Befestigungselement zum Befestigen von Isolationsbahnen oder - platten und gegebenenfalls zusätzlichen Abdichtungsbahnen auf einem festen Unterbau, gemäß dem Oberbegriff von Anspruch 1, dessen Merkmale aus der EP 783 063 A bekannt sind.

Solche Befestigungselemente, aber auch deren Bereitstellung in vormontiertem Zustand sind bereits in vielen Ausführungsvarianten bekannt. Bei einer Vormontage der Befestigungsetemente werden die Schrauben in den rohrförmigen Fortsatz der großflächigen Unterlegscheiben eingesetzt und in dieser Ausführung auf die Baustelle angeliefert. Solange derartige vormontierte Befestigungselemente mittels Setzautomaten verarbeitet werden, bei welchen ein Schraubendreherbit unmittelbar den axialen Vorschub der Schraube, also auch das Einstekken in eine Dachbahn, übernimmt, ergeben sich in der Regel keine Probleme. Gerade aber bei kleineren Dachaufbauten oder bei der Befestigung von Isolationsbahnen oder -platten sind die Befestigungselemente in vormontiertem Zustand von Hand vorzustecken, d.h. von Hand in die Isolationsbahnen oder -platten und gegebenenfalls in zusätzliche Abdichtungsbahnen hineinzudrücken. Ein solches Einstecken kann aber auch dann vorteilhaft sein, wenn eine Verarbeitung mit einem Setzgerät erfolgt.

Die vorliegende Erfindung hat sich zur Aufgabe gestellt, bei einem Befestigungselement der eingangs genannten Art die Handhabungsmöglichkeit beim Vorstecken desselben wesentlich zu verbessern.

Erfindungsgemäß gelingt dies durch die Merkmale des kennzeichnenden Teils von Anspruch 1.

Die Schrauben werden in dem rohrförmigen Fortsatz der großflächigen Unterlegscheibe vormontiert, indem der Schraubenkopf über ein entsprechendes Hindernis (Rippe, Noppe oder dergleichen) hineingedrückt wird, wobei die Rippe, Noppe oder dergleichen einen Anschlag bildet, um das komplette Befestigungselement in Isolationsbahnen oder -platten und gegebenenfalls zusätzlich in Abdichtungsbahnen hineinzudrücken. Aufgrund der großflächigen Unterlegscheibe steht eine relativ große Handhabe zur Halterung des Befestigungselementes zur Verfügung, und zwar unabhängig davon, ob nun ein Einstecken von Hand oder mittels eines Setzgerätes erfolgt, so daß die Kraftübertragung beim Eindrücken in die Isolationsbahnen oder -platten und gegebenenfalls zusätzlich in Abdichtungsbahnen problemlos durchgeführt werden kann. Trotzdem ist die Gewähr gegeben, daß sich die Schraube nicht zur Gänze in den rohrförmigen Fortsatz hineinbewegen kann, sondern eben einen Anschlag in Form einer Rippe, einer Noppe oder dergleichen vorfindet. Selbst bei relativ kräftigem Eindrücken des vormontierten Befestigungselementes wird die auf die großflächige Unterlegscheibe ausgeübte Kraft über die Rippe, Noppe oder dergleichen auf den Schraubenkopf und somit auf die eingesetzte Schraube übertragen. Somit ist auch immer gewährleistet, daß die am freien Ende der Schraube ausgebildete Bohr- oder Eindringspitze an vorderster Stelle des vormontierten Befestigungselementes liegt, wodurch das Vorstecken der Befestigungselemente erleichtert wird.

Eine Ausführungsvariante sieht vor, daß die Rippe, Noppe oder dergleichen annähernd im Mittelbereich bezogen auf die Länge des rohrförmigen Fortsatzes ausgebildet ist. Dadurch kann sich die Schraube in dem rohrförmigen Fortsatz über einen relativ großen Bereich in axialer Richtung verschieben, was eine teleskopartige Wirkung mit sich bringt. Eine teleskopartige Wirkung ist insbesondere beim Einsatz der Befestigungselemente im Dachbereich, d.h. wenn begehbare Flächen mit solchen Befestigungselementen zu versehen sind, sinnvoll. Beim Auftreten auf ein derartiges Befestigungselement kann sich die großflächige Unterlegscheibe mit dem rohrförmigen Fortsatz in axialer Richtung nach unten und nachträglich durch die elastische Wirkung der Isolationsbahnen oder -platten wieder in die Ausgangslage zurückbewegen.

Eine vorteilhafte Ausgestaltung liegt darin, daß eine umfangsgeschlossen über die ganze Innenwandung durchgehende Rippe vorgesehen ist. Bei einer Vormontage kann diese Rippe leicht überwunden werden, da eine Vormontage von großflächigen Unterlegscheiben mit rohrförmigem Fortsatz und Schrauben in der Regel mit entsprechenden Montagegeräten, welche die dazu erforderliche Kraft aufbringen, erfolgt. Werden die Befestigungselemente dann von Hand vorgesteckt, ist die Gewähr gegeben, daß der Schraubenkopf nicht mehr über die umfangsgeschlossen durchgehende Rippe springen kann, d.h. es ist ein fester Anschlag vorhanden.

Von Vorteil ist, wenn der Abstand der Rippe, Noppe oder dergleichen vom freien Ende des rohrförmigen Fortsatzes kleiner ist als die gesamte Länge der Schraube einschließlich eines am freien Ende ausgebildeten Bohrteiles. Dadurch ist die Gewähr gegeben, daß in jenem Zustand, in welchem der Schraubenkopf an der Rippe, Noppe oder dergleichen einen Anschlag findet, das freie Ende der Schraube, insbesondere der Bohrteil, immer noch über das freie Ende des rohrförmigen Fortsatzes vorsteht. Dies erleichtert das Eindringen des Befestigungselementes beim Vorstecken wesentlich.

Zu einer einfachen Montagemöglichkeit und einem optimalen Anschlag beim Vorstecken trägt ebenfalls bei, wenn der Schraubenkopf linsenförmig und der Übergang desselben zum Schaft kegelstumpfförmig ausgeführt ist. In einem solchen Falle besteht bei der Vormontage die Möglichkeit eines leichten Durchdrückens des Schraubenkopfes über die vorstehende Rippe, Noppe oder dergleichen. Trotzdem ist durch die linsenförmige Ausgestaltung an der Oberseite des Schraubenkopfes ein optimaler Anschlag gewährleistet.

Durch die erfindungsgemäße Ausgestaltung der vormontierten Befestigungselemente ergibt sich die weitere Möglichkeit, daß mehrere aneinander anschließende oder mit geringem Abstand aufeinander folgende großflächige Unterlegscheiben mit einem rohrförmigen Fortsatz über Stege oder Streifen zu einer Art Magazinierstreifen miteinander verbunden sind. Dies stellt für den Transport und das Vorstecken auf der Baustelle eine wesentliche Erleichterung dar. In diesem Zusammenhang kann dann noch vorgesehen werden, daß die aneinander anschließenden Unterlegscheiben relativ leicht voneinander trennbar sind.

Theoretisch ist es denkbar, die Schrauben jeweils unmittelbar vor dem Vorstecken in den rohrförmigen Fortsatz der Unterlegscheiben zu montieren. Vorteilhaft wird jedoch vorgesehen, daß die Schrauben bereits in dem rohrförmigen Fortsatz der großflächigen Unterlegscheiben vormontiert sind, d.h. der Schraubenkopf jeweils schon über die Rippe, Noppe oder dergleichen an der Innenbegrenzung des rohrförmigen Fortsatzes hineingedrückt ist, so daß die Rippe, Noppe oder dergleichen als Anschlag für den Schraubenkopf dient. Durch eine derartige Vormontage ist zusätzlich eine Verliersicherung gegeben, da die Schrauben sowohl beim Transport, als auch bei ihrem Einsatz auf der Baustelle nicht aus den rohrförmigen Fortsätzen der großflächigen Unterlegscheiben herausfallen können.

Weitere erfindungsgemäße Merkmale und besondere Vorteile werden in der nachstehenden Beschreibung anhand der Zeichnungen noch näher erläutert. Es zeigen:

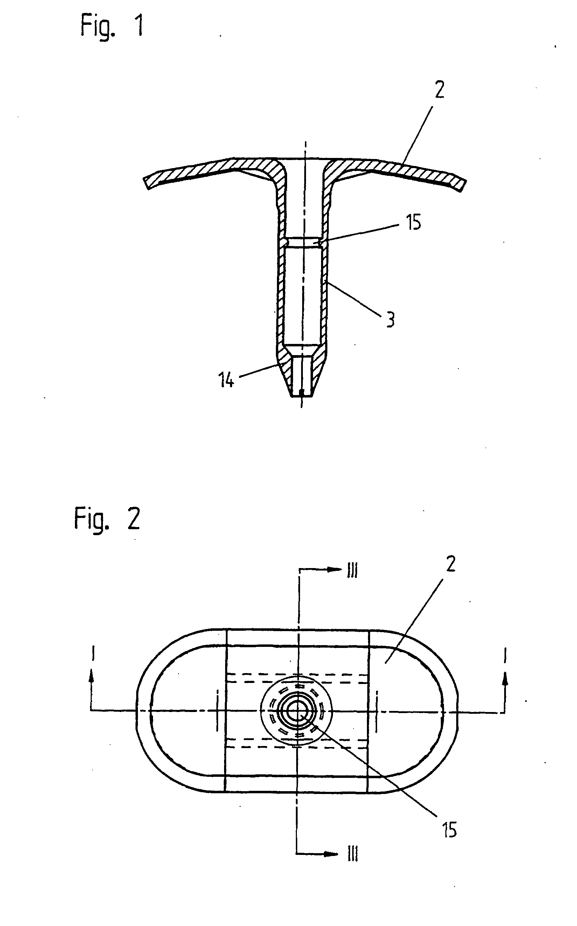

- Fig. 1: einen Schnitt durch eine Unterlegscheibe mit einem rohrförmigen Fortsatz nach der Linie I-I in Fig. 2;
- Fig. 2: eine Draufsicht auf eine großflächige Unterlegscheibe;

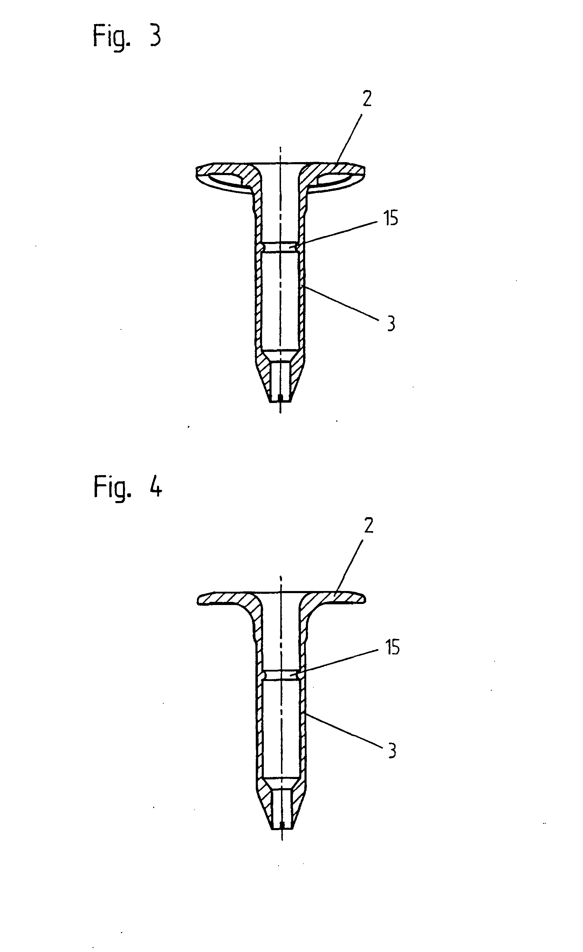

- Fig. 3: einen Schnitt nach der Linie III-III in Fig. 2;
- Fig. 4: einen Längsschnitt durch eine großflächige Unterlegscheibe mit einem rohrförmigen Fortsatz, bei welcher die großflächige Unterlegscheibe im wesentlichen kreisförmig ausgebildet ist;
- Fig. 5: einen Schnitt durch mehrere Befestigungselemente, bei welchen in den rohrförmigen Fortsatz der großflächigen Unterlegscheiben Schrauben vormontiert sind, wobei die Befestigungselemente nach Art eines Magazinierstreifens miteinander verbunden sind;
- Fig. 6: eine Draufsicht auf den Magazinierstreifen gemäß Fig. 5;
- Fig. 7: einen Schnitt durch ein Befestigungselement beim Vorstecken in eine Isolationsbahn oder -platte mit einer zusätzlichen Abdichtungsbahn.

In den Zeichnungen sind zwei Ausführungsvarianten von großflächigen Unterlegscheiben dargestellt, und zwar einerseits Unterlegscheiben in länglicher Form und andererseits Unterlegscheiben mit einer Kreisform. Die Ausführung der Unterlegscheiben 2 hat jedoch auf die vorliegende Erfindung keinen Einfluß, so daß in der Beschreibung diesbezüglich auch keine Unterscheidung gemacht wird. Grundsätzlich sind alle Möglichkeiten der Formgebung offen. So ist es auch denkbar, daß die großflächige Unterlegscheibe 2 und ein daran anschließender rohrförmiger Fortsatz 3 als getrennte Teile gefertigt werden, die anschließend beispielsweise fest miteinander verbunden werden oder aber form- und/oder kraftschlüssig ineinander eingreifen. Die Unterlegscheiben 2 samt rohrförmigem Fortsatz 3 sind in der Regel aus Kunststoff gefertigt, wobei ebenfalls die Möglichkeit besteht, den rohrförmigen Fortsatz 3 aus Kunststoff und die großflächige Unterlegscheibe 2 z.B. aus Metall herzustellen.

Das Befestigungselement 1 besteht aus einer großflächigen Unterlegscheibe 2 mit einem rohrförmigen Fortsatz 3 und einer Schraube 4. Mit einem derartigen Befestigungselement 1 sollen Isolationsbahnen 5 oder -platten und gegebenenfalls zusätzlich Abdichtungsbahnen 6 auf einem festen Unterbau 7 befestigt werden. Die Schraube 4 ist wenigstens über einen Teil der Länge ihres Schaftes 8 mit einem Gewinde 9 versehen, wobei am freien Ende der Schraube 4 zum Eindringen derselben in den Unterbau 7 ein Bohrteil 10 ausgebildet ist. Am anderen Ende weist die Schraube 4 einen Schraubenkopf 11 auf, dessen Oberseite 12 linsenförmig ausgeführt ist. Die Unterseite 13 des Schraubenkopfes ist kegelstumpfförmig ausgebildet.

Der rohrförmige Fortsatz 3 weist wenigstens über einen großen Teilabschnitt seiner Länge einen zur drehbaren Aufnahme und zum axialen Verschieben des Schraubenkopfes 1 1 ausreichend großen Innenquerschnitt, d.h. einen entsprechend großen Durchmesser D auf. An dem der Unterlegscheibe 2 abgewandten Ende des rohrförmigen Fortsatzes 3 ist ein Endabschnitt 14 ausgebildet, der eine Durchgangsöffnung aufweist, die den Durchtritt des Schaftes 8 der Schraube 4 bzw. des Gewindes 9 auf dem Schaft 8 erlaubt.

In dem Teilabschnitt des rohrförmigen Fortsatzes 3, in weichem der Schraubenkopf 11 axial verschiebbar ist, wird eine in den Verschiebebereich radial nach innen vorstehende Rippe 15 vorgesehen, welche den Bewegungsbereich des Schraubenkopfes 11 einschränkt.

Bei der Vormontage der Schraube 4 in dem rohrförmigen Fortsatz 3 wird der Schraubenkopf 11 über die Rippe 15 in Richtung zum freien Ende des rohrförmigen Fortsatzes 3 hin nach unten gedrückt. Sobald der Schraubenkopf 11 das durch die Rippe 15 gebildete Hindernis überwunden hat, bildet die Rippe 15 entgegen der Einschraubrichtung gesehen einen Anschlag für den Schraubenkopf 11, d.h. die Schraube ist in dem rohrförmigen Fortsatz 3 entgegen der Einschraubrichtung abgestützt.

Die Vormontage erfolgt durch entsprechende Geräte oder Einrichtungen, so daß der Kraftaufwand für die Überwindung der vorstehenden Rippe 15 kein Problem darstellt. Nachdem der rohrförmige Fortsatz 3 in der Regel aus Kunststoff besteht, wird die Rippe 15 beim Durchdrücken des Schraubenkopfes 11 elastisch zurückgedrückt. Dazu trägt auch bei, daß an der Unterseite des Schraubenkopfes ein kegelstumpfförmiger Übergang ausgebildet ist. Daher ist es durchaus möglich, daß sich die Rippe 15 umfangsgeschlossen durchgehend über den ganzen Bereich der Innenwandung erstreckt.

Die Rippe 15 ist annähernd im Mittelbereich bezogen auf die Länge des rohrförmigen Fortsatzes ausgebildet. Je nach Länge der Schraube 4 oder je nach gewünschter Teleskopierbarkeit zwischen dem rohrförmigen Fortsatz 3 und der Schraube 4 kann die Rippe 15 sowohl näher dem freien Ende des rohrförmigen Fortsatzes 3 als auch näher der großflächigen Unterlegscheibe 2 ausgebildet sein. Dabei ist jedoch darauf zu achten, daß der Abstand A der Rippe 15 vom freien Ende des rohrförmigen Fortsatzes 3 kleiner ist als die gesamte Länge L der Schraube einschließlich des am freien Ende ausgebildeten Bohrteiles 10. Damit ist stets gewährleistet, daß zumindest der Bohrteil 10 oder aber auch Teile des Schaftes 8 mit dem Gewinde 9 über das freie Ende des rohrförmigen Fortsatzes 3 vorstehen.

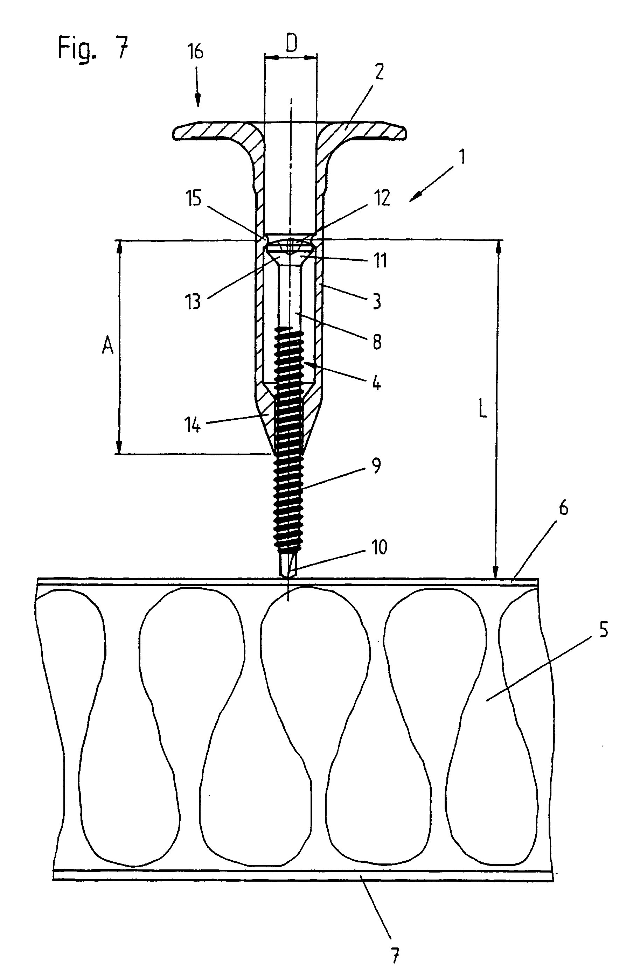

Wenn ein Befestigungselement 1 in der in Fig. 7 dargestellten vormontierten Art zur Verfügung steht, kann die großflächige Unterlegscheibe 2 beispielsweise von Hand erfaßt und dann der Bohrteil 10 und somit auch ein entsprechender Abschnitt des Schaftes 8 der Schraube 4 durch Niederdrücken in Pfeilrichtung 16 in die Abdichtungsbahn 6 und in die Isolationsbahn 5 eingedrückt werden. Dies ermöglicht ein Vorstecken des Befestigungselementes 1 und die endgültige Setzung desselben mittels eines Eintreibgerätes. Bei dem Eindrücken bildet die Rippe 15 für den Schraubenkopf 11 einen Anschlag, so daß die Kraft beim Niederdrücken der großflächigen Unterlegscheibe 2 auf den Schraubenkopf 11 und somit auf das freie Ende der Schraube 4 übertragen werden kann. Ein vormontiertes Befestigungselement 1 kann aber auch vorteilhaft in einem Setzgerät verarbeitet werden, wobei dann die vorstehende Schraube unter Umständen schon in den Untergrund eingedrückt werden kann, bevor der Schraubendreherbit mit der Schraube in Wirkverbindung kommt.

Solche Befestigungselemente 1 werden vorteilhaft bereits im Herstellungswerk vormontiert, indem Schrauben 4 in den rohrförmigen Fortsatz 3 der großflächigen Unterlegscheiben 2 eingesetzt werden. Durch entsprechenden Kraftaufwand kann der Schraubenkopf 11 über die durch die Rippe 15 gebildete Verengung gedrückt werden, worauf die Rippe 15 als Anschlag für den Schraubenkopf in die eine Bewegungsrichtung dient. Trotzdem ist eine teleskopartige Bewegung zwischen der Schraube 4 und dem rohrförmigen Fortsatz 3 möglich. Dadurch wird die Handhabung beim Vorstecken wesentlich verbessert und zusätzlich eine Verliersicherung für die Schraube geschaffen.

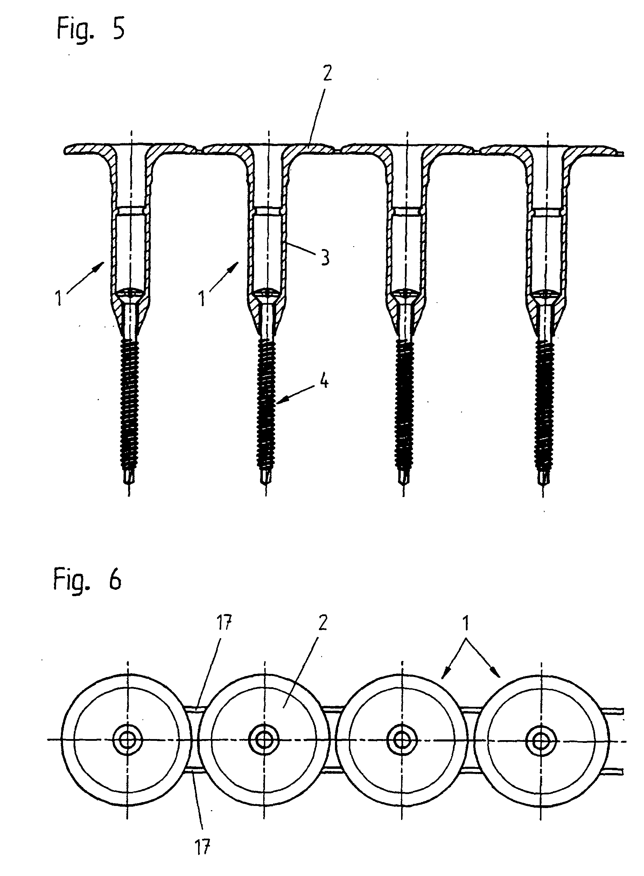

Aus den Fig. 5 und 6 ist ersichtlich, daß mehrere, aneinander anschließende oder mit geringem Abstand aufeinander folgende Befestigungselemente zu einer Art Magazinierstreifen miteinander verbunden sein können. Beim gezeigten Beispiel sind im Bereich der großflächigen Unterlegscheiben 2 gegenseitige Verbindungen durch Stege 17 oder Streifen vorgesehen.

In der vorstehenden Beschreibung wurde stets von einer radial nach innen vorstehenden Rippe 15 gesprochen. Es ist aber auch durchaus denkbar, mehr als eine Rippe 15 vorzusehen. In einem solchen Falle wäre der Schraubenkopf beispielsweise zwischen zwei Rippen 15 vormontiert, wobei der Abstand der Rippen den axialen Bewegungsbereich zwischen Schraube und rohrförmigen Fortsatz bestimmt. Im Rahmen der Erfindung besteht aber ebenfalls die Möglichkeit, anstelle von Rippen lediglich eine oder mehrere Noppen, welche bei der Vormontage der Schrauben möglicherweise leichter überwunden werden können, beim Vorstecken des komplettierten Befestigungselementes aber trotzdem einen ausreichenden Anschlag bilden, vorzusehen. Um ein Eindrücken des Schraubenkopfes zu erleichtern und dennoch einen entsprechend starken Anschlag gegen ein Zurückfahren zur Verfügung zu haben, ist eine Anpassungsmöglichkeit noch insofern gegeben, als bei den Rippen, Noppen oder dergleichen besondere Querschnittsformen vorgesehen werden können.

## Patentansprüche

1. Befestigungselement zum Befestigen von Isolationsbahnen oder -platten und gegebenenfalls zusätzlichen Abdichtungsbahnen auf einem festen Unterbau, bestehend aus einer Schraube, welche wenigstens über einen Teil der Länge ihres Schaftes mit einem Gewinde versehen ist und einen Schraubenkopf aufweist, und einer großflächigen Unterlegscheibe mit einem rohrförmigen Fortsatz, wobei der Fortsatz der Unterlegscheibe wenigstens über einen großen Teilabschnitt seiner Länge einen zur drehbaren Aufnahme und zum axialen Verschieben des Schraubenkopfes ausreichend großen Innenquerschnitt aufweist und an seinem der Unterlegscheibe abgewandten Endbereich zum Durchtritt des Schaftes der Schraube verengt ist, wobei in dem Teilabschnitt des rohrförmigen Fortsatzes (3) zur axial verschiebbaren Aufnahme des Schraubenkopfes (11) wenigstens eine in den Verschiebebereich radial nach innen vorstehende Rippe (15), eine oder mehrere Noppen oder dergleichen vorgesehen ist bzw. sind, **dadurch gekennzeichnet, daß** sich der Schraubenkopf (11) nach dem Überwinden der Rippen (15), Noppen oder dergleichen in Richtung zum freien Ende des rohrförmigen Fortsatzes (3) hin entgegen der Einschraubrichtung an den Rippen (15), Noppen oder dergleichen abstützen kann.

2. Befestigungselement nach Anspruch 1, **dadurch gekennzeichnet, daß** die Rippe (15), Noppe oder dergleichen annähernd im Mittelbereich bezogen auf die Länge des rohrförmigen Fortsatzes (3) ausgebildet ist.

3. Befestigungselement nach den Ansprüchen 1 und 2, **dadurch gekennzeichnet, daß** eine umfangsgeschlossen über die ganze Innenwandung durchgehende Rippe (15) vorgesehen ist.

4. Befestigungselement nach den Ansprüchen 1 bis 3, **dadurch gekennzeichnet, daß** der Abstand (A) der Rippe (15), Noppe oder dergleichen vom freien Ende des rohrförmigen Fortsatzes (3) kleiner ist als die gesamte Länge (L) der Schraube (4) einschließlich eines am freien Ende ausgebildeten Bohrteiles (10).

5. Befestigungselement nach einem der Ansprüche 1 bis 4, **dadurch gekennzeichnet, daß** der Schraubenkopf (11) linsenförmig und der Übergang desselben zum Schaft (8) kegelstumpfförmig ausgeführt ist.

6. Befestigungselement nach einem der Ansprüche 1 bis 5, **dadurch gekennzeichnet, daß** mehrere aneinander anschließende oder mit geringem Abstand aufeinander folgende großflächige Unterlegscheiben (2) mit einem rohrförmigen Fortsatz (3) über Stege (17) oder Streifen zu einer Art Magazinierstreifen miteinander verbunden sind.

7. Befestigungselement nach einem der Ansprüche 1 bis 6, **dadurch gekennzeichnet, daß** die Schrauben (4) in den rohrförmigen Fortsätzen (3) der großflächigen Unterlegscheiben (2) vormontiert sind, wobei der Schraubenkopf (11) jeweils bereits über die Rippe (15), Noppe oder dergleichen an der lnnenbegrenzung des rohrförmigen Fortsatzes (3) hineingedrückt ist, so daß die Rippe (15), Noppe oder dergleichen als Anschlag für den Schraubenkopf (11) dient.

## Claims

1. A fastening element (1) for fastening insulating sheets or panels and optionally additional sealing sheets on a fixed substructure, comprising a screw which is provided with a screw-thread at least over part of the length of its shank and has a screw head, and a large-area washer with a tubular extension, wherein the extension of the washer at least over a large portion of its length has a sufficiently large internal cross-section to receive the screw head rotatably and for axial displacement, and which at its end zone remote from the washer is narrowed for the passage of the screw shank, wherein in the portion of the tubular extension (3) to receive the screw head (11) for axial displacement at least one rib (15) projecting radially inward in the displacement zone or one or more projections or the like is/are provided, **characterised in that**, after overcoming the ribs (15), projections or the like in the direction of the free end of the tubular extension (3) counter to the screwing-in direction the screw head (11) can bear against the ribs (15), projections or the like.

2. A fastening element according to Claim 1, **characterised in that** the rib (15), projection or the like is formed approximately in the central region in relation to the length of the tubular extension (3).

3. A fastening element according to Claims 1 and 2, **characterised in that** a peripherally closed rib (15) is provided which is continuous over the entire inner wall.

4. A fastening element according to any one of Claims 1 to 3, **characterised in that** the distance (A) of the rib (15), projection or the like from the free end of the tubular extension (3) is smaller than the entire length (L) of the screw (4) including a drilling member (10) formed at the free end.

5. A fastening element according to any one of Claims 1 to 4, **characterised in that** the screw head (11) is lenticular and the transition thereof into the shank (8) is of frustoconical shape.

6. A fastening element according to any one of Claims 1 to 5, **characterised in that** a plurality of large-area washers (2) with a tubular extension (3), which are mutually adjacent or which follow one another at a small distance apart, are joined together via webs (17) or strips to form a type of magazine strip.

7. A fastening element according to any one of Claims 1 to 6, **characterised in that** the screws (4) are preinstalled in the tubular extensions (3) of the large-area washers (2), wherein in each case the screw head (11) is already inserted beyond the rib (15), projection or the like on the inner boundary of the tubular extension (3) so that the rib (15), projection or the like serves as a stop for the screw head (11) .

## Revendications

1. Elément de fixation de bandes ou de plaques d'isolation et, le cas échéant, de bandes d'étanchéité supplémentaires sur une base fixe, se composant d'une vis, pourvue d'un filetage au moins sur une partie de la longueur de tige avec une tête de vis (11), et une rondelle de grande dimension comportant un appendice tubulaire, l'appendice de la rondelle présentant au moins sur une grande section partielle de sa longueur une section transversale intérieure de dimension suffisante pour accueillir axialement la tête de vis (11) de façon rotative et mobile, étant rétréci au niveau de sa zone d'extrémité opposée à la rondelle pour le passage de la tige de la vis, au moins une nervure (15), dépassant radialement vers l'intérieur dans la zone de déplacement, ou un ou plusieurs boutons ou analogues, sont prévu(s) dans la section partielle de l'appendice tubulaire (3) pour accueillir axialement 1a tête de vis (11) de façon mobile,
**caractérisé en ce que**
la tête de vis (11), après avoir franchi les nervures (15), boutons ou analogues en direction de l'extrémité libre de l'appendice tubulaire (3), peut s'appuyer, à l'encontre de la direction de vissage, sur les nervures (15), boutons ou analogues.

2. Elément de fixation selon la revendication 1,
**caractérisé en ce que**
la nervure (15), le bouton ou analogue est situé approximativement dans la zone médiane par rapport à la longueur de l'appendice tubulaire (3).

3. Elément de fixation selon les revendications 1 ou 2,
**caractérisé en ce qu'**
il est prévu une nervure (15) périphérique fermée sur la totalité de la paroi intérieure.

4. Elément de fixation selon les revendications 1 à 3,
**caractérisé en ce que**
la distance (A) entre la nervure (15), le bouton ou analogue et l'extrémité libre de l'appendice tubulaire (3) est inférieure à la longueur totale (L) de la vis (4), y compris d'une partie d'alésage (10) configurée sur l'extrémité libre.

5. Elément de fixation selon l'une des revendications 1 à 4,
**caractérisé en ce que**
la tête de vis (11) est configurée en forme de lentille et la transition entre celle-ci et la tige (8) est configurée en forme de tronc de cône.

6. Elément de fixation selon l'une des revendications 1 à 5,
**caractérisé en ce que**
plusieurs rondelles de grande dimension (2) comportant un appendice tubulaire (3) et rattachés les uns aux autres ou se suivant à faible distance les uns des autres sont reliés entre eux par le biais de traverses (17) ou de bandes pour former une sorte de bande de chargement de barillets.

7. Elément de fixation selon l'une des revendications 1 à 6,
**caractérisé en ce que**
les vis (4) sont préalablement montées dans les appendices tubulaires (3) des rondelles de grande dimension (2), la tête de vis (11) étant respectivement enfoncée déjà via la nervure (15), le bouton ou analogue au niveau de la limitation intérieure de l'appendice tubulaire (3), de telle sorte que la nervure (15), le bouton ou analogue sert de butée pour la tête de vis (11).
